# EUROPÄISCHE PATENTSCHRIFT

(11) **EP 3 125 723 B1**
(45) Veröffentlichungstag und Bekanntmachung des Hinweises auf die Patenterteilung: **23.05.2018**
(21) Anmeldenummer: 15741846.8
(22) Anmeldetag: 26.03.2015
(51) Int. Cl.: A47B 46/00, A47L 15/50, F24C 15/16, A47B 88/00

(54) **MÖBEL ODER HAUSHALTSGERÄT MIT EINER SCHIEBE-SCHWENKMECHANIK EINER ABLAGE**
PIECE OF FURNITURE OR DOMESTIC APPLIANCE WITH A SLIDING/PIVOTING MECHANISM OF A SHELF
MEUBLE OU APPAREIL MÉNAGER AVEC UN MÉCANISME DE COULISSEMENT ET DE PIVOTEMENT D'UN PLATEAU

(30) Priorität: 03.04.2014 DE 102014104733
(43) Veröffentlichungstag der Anmeldung: 08.02.2017
(73) Patentinhaber: Paul Hettich GmbH & Co. KG, 32278 Kirchlengern (DE)
(72) Erfinder: AZKUE, Mikel, 20800 Zarautz (ES); GARCIA, Oscar, 20014 San Sebastian (ES); ARRIAGA, Eñaut, 20240 Ordizia (ES); LOPETEGI, Iker, 20800 Zarautz (ES); LASKIBAR, Unai, 20800 Zarautz (ES)
(74) Vertreter: Dantz, Jan Henning
(86) Internationale Anmeldenummer: PCT/EP2015/056565
(87) Internationale Veröffentlichungsnummer: WO 2015/150220

(56) Entgegenhaltungen:
- WO-A1-2014/033092
- CN-U- 203 121 570
- JP-A- 2001 017 245
- JP-A- 2005 087 360
- US-A1- 2008 129 168

## Beschreibung

Die vorliegende Erfindung betrifft ein Möbel oder Haushaltsgerät mit einer Schiebe-Schwenkmechanik einer Ablage zum Ausziehen und Anheben der Ablage aus einem Korpus des Möbels oder Haushaltsgerätes gemäß dem Oberbegriff des Anspruchs 1. Die Erfindung betrifft des Weiteren ein Haushaltsgerät sowie ein Möbel. Ein gattungsgemäßes Haushaltsgerät mit einer Schiebe-Schwenkmechanik ist aus der US 2008/0129168 A1 bekannt. Solche Schiebe-Schwenkmechaniken werden insbesondere häufig in Geschirrspülern, Kühlgeräten, Gefriergeräten oder Gargeräten verbaut, um einen unteren Geschirrkorb, Behälter bzw. Gargutträger aus dem Spülraum des Geschirrspülers, des Kühl- oder Gefrierraumes des Kühl- oder Gefriergerätes bzw. dem Garraum des Gargerätes herausziehen und gleichzeitig nach oben in eine Position anzuheben, in der eine für einen Benutzer bequeme Be- und Entladung des Geschirrkorbes bzw. Gargutträgers ermöglicht ist. Es ist außerdem beispielsweise aus der EP 1991104 ein Geschirrkorb mit Schiebe-Schwenkmechanik eines gattungsgemäßen Haushaltsgerätes bekannt, der mittels einer Auszugsführung im Wesentlichen horizontal aus dem Korpus des Haushaltsgerätes herausziehbar ist. Es auch bekannt, diese Art von Auszugsführungen für Gargutträger und Behälter in anderen gattungsgemäßen Haushaltsgeräten zu benutzen. Dieser Korb, Behälter bzw. Gargutträger kann dabei oberhalb des über eine entsprechende Schiebe-Schwenkmechanik gehaltenen Korbes, Behälters oder Gargutträgers angeordnet sein.
Solche Haushaltsgeräte und Möbel bzw. die oben genannte Schiebe-Schwenkmechanik haben sich in der Praxis an sich bewährt.
Wünschenswert ist es, den Ablauf der Auszugs- bzw. Anhebe- und. Absenk- und Einfahrbewegung der jeweiligen Ablagen insbesondere kurz vor Erreichen der Endposition der Ablagen dahingehend zu steuern, dass ein abruptes Anschlagen der Ablagen in dieser Endposition vermieden wird.

Die gestellte Aufgabe wird durch ein Möbel oder Haushaltsgerät mit einer Schiebe-Schwenkmechanik einer Ablage mit den Merkmalen des Anspruchs 1 gelöst. Das erfindungsgemäße Möbel oder Haushaltsgerät weist wenigstens zwei an mindestens einer der Seitenwände des Korpus mit einem ersten Ende parallel zur Ebene der Seitenwände drehbar festgelegte und parallel zueinander beabstandet angeordnete Schwenkarme auf. An jeweiligen zweiten Enden der Schwenkarme ist eine Führungsschiene derart parallel zur Ebene der Seitenwände schwenkbar festgelegt, dass die Führungsschiene aus einer unteren Position innerhalb des Korpus in eine angehobene, obere Position zumindest teilweise außerhalb des Korpus verschwenkbar ist. In dieser Führungsschiene ist eine Laufschiene linear verschiebbar, an der die Ablage befestigt ist. Erfindungsgemäß weist die Schiebe-Schwenkmechanik eine die Fahrbewegung der Ablage in einer Endposition abdämpfende Dämpfungseinheit, die an der Schiebe-Schwenkmechanik angeordnet ist, auf. Es kann dabei mindestens das Fahren in die Endposition innerhalb des Korpus oder mindestens das Bewegen in die Endposition im ausgezogenen bzw. hochgeschwenkten Zustand gedämpft werden. Zusätzlich kann bei der Schiebe-Schwenkmechanik das Bewegen in die abgesenkte Position gedämpft werden. Erfindungsgemäß ist die Dämpfungseinheit als Teil einer Einzugsvorrichtung oder Ausstoßvorrichtung ausgebildet. Eine mit einer solchen Dämpfungseinheit versehene Schiebe-Schwenkmechanik ermöglicht es, dass die Ablage kontrolliert vor Erreichen ihrer Endlage, beispielsweise im Korpus des Möbels bzw. Nutzraum des Haushaltsgerätes, abgebremst wird, wodurch in effektiver Weise verhindert wird, dass beispielsweise nicht bruchfeste Gegenstände wie Gläser, Keramikgeschirr und dergleichen beim Anschlag der Ablage in ihre Endposition beschädigt werden, insbesondere zerbrechen.
Zusätzlich wird nicht nur die im Wesentlichen horizontale linear Bewegung der Ablage in ihre Endposition im Inneren des Korpus abgedämpft, sondern auch die beim Absenken der Ablage aus der angeordneten, oberen Position entstandene schwerkraftbedingte Beschleunigung der Ablage.

In entsprechender Weise weist das erfindungsgemäße Haushaltsgerät, insbesondere eine Spülmaschine oder ein Gargerät mit mindestens einer an den Innenseiten eines Nutzraums, insbesondere Spülraums oder Garraums, eine Auszugsführung auf, mit der eine an dieser fixierte Ablage aus dem Nutzraum ausziehbar ist, wobei die Auszugsführung zumindest eine an einer der Innenseiten des Nutzraums befestigte Führungsschiene und eine in der Führungsschiene verfahrbare und an der Ablage fixierte Laufschiene auf, an der mindestens eine Halterung zur Fixierung der Ablage angeordnet ist, wobei an der Auszugsführung eine die Fahrbewegung der Ablage in eine Endposition abdämpfende Dämpfungseinheit angeordnet ist. Es kann dabei sowohl die Endposition innerhalb des Korpus als auch die Endposition im ausgezogenen Zustand gedämpft werden. Der Dämpfer ist dabei bevorzugt als Fluiddämpfer mit einem Kolben und einer Kolbenstange, die in oder an einem Gehäuse angeordnet sind, ausgeführt.

Dadurch ist gewährleistet, dass auch eine im Wesentlichen horizontal aus dem Nutzraum eines Haushaltsgeräts ausziehbare und einschiebbare Ablage in kontrollierter, gedämpfter Weise in ihre Endposition einfahrbar ist.

Vorteilhafte Ausführungsvarianten der Erfindung sind Gegenstand der Unteransprüche.

Gemäß einer vorteilhaften Ausführungsvariante weist die Dämpfungseinheit einen Dämpfer und einen den Dämpfer aktvierenden Aktivator auf. Der Aktivator ist dabei bevorzugt an der Laufschiene oder einen mit der Laufschiene bewegbaren Bauteil angeordnet, während der Dämpfer an der Führungsschiene oder einem mit der Führungsschiene verbundenen Bauteil angeordnet ist. Es ist natürlich auch die umgekehrte Anordnung von Aktivator und Dämpfer möglich. Auch kann der Dämpfer am Korpus, beispielsweise im Bereich der Rückwand, oder an der Ablage angeordnet sein.

Der Dämpfer ist dabei bevorzugt als Fluiddämpfer mit einem Kolben und einer Kolbenstange, die in oder an einem Gehäuse angeordnet sind, ausgeführt. Für die Dämpfung der Hebe- und Senkbewegungen können auch Gasdruckdämpfer verwendet werden.

Gemäß einer weiteren vorteilhaften Ausgestaltung weist die Schiebe-Schwenkmechanik einen an der Führungsschiene und an einem der Schwenkarme angeordneten und durch eine an der Laufschiene fixierte Aktivator-Baugruppe betätigbaren Arretier-Mechanismus zur Verhinderung einer gleichzeitigen Schwenk- und Schiebebewegung der Laufschiene auf. Erfindungsgemäß ist die Dämpfungseinheit als Teil einer Einzugs- und/oder Ausstoßvorrichtung ausgebildet. Dadurch ist ermöglicht, dass der Benutzer das Herausziehen der Ablage aus dem Korpus des Möbels oder Haushaltsgerätes nur initiieren muss und die Ausstoßmechanik die Ablage selbststätig soweit aus dem Korpus des Möbels oder Haushaltsgerätes herausfährt, dass der Benutzer nicht in den Spülraum bzw. Garraum greifen muss und damit die Gefahr einer Verschmutzung oder Verletzung der Hand oder des Arms des Benutzers durch beispielsweise Berühren verschmutzten Geschirrs oder scharfkantiger Gegenstände wie Messer oder dergleichen vermieden wird.
Im Falle der Schiebe-Schwenkmechanik ist der Aktivator bevorzugt an der dem Arretiermechanismus betätigenden Aktivator-Baugruppe angeordnet. Dies hat den Vorteil, dass für die Anordnung bzw. Befestigung des Aktivators ein bereits vorhandenes Bauteil genutzt werden kann.

Im Falle des Haushaltsgerätes ist der Aktivator bevorzugt einstückig mit der Halterung ausgebildet.

Zusätzlich ist bei dem Haushaltsgerät die Laufschiene bevorzugt einstückig mit der mindestens einen Halterung ausgebildet. Die Laufschiene und die Halterung für die Ablage sind dabei bevorzugt aus Kunststoff gefertigt, so dass ein solcher Aktivator in einfacher und kostengünstiger Weise an der Laufschiene oder der Halterung anspritzbar ist.
Bevorzugte Ausführungsbeispiele der Erfindung werden nachfolgend anhand der beiliegenden Zeichnungen näher erläutert. Es zeigen:
- Figur 1: eine perspektivische Ansicht einer Ausführungsvariante der Schiebe-Schwenkmechanik mit Dämpfungseinheit eines erfindungsgemäßen Möbels oder Haushaltsgeräts,
- Figur 2a: eine perspektivische Ansicht der Schiebe-Schwenkmechanik aus Figur 1 vor der Montage der Dämpfungseinheit,
- Figur 2b und 2c: zwei Detailansichten einer gedämpften Einzugsvorrichtung für ein erfindungsgemäßes Haushaltsgerät
- Figur 3: eine Seitenansicht der Schiebe-Schwenkmechanik aus Figur 1,
- Figur 4: eine Seitenansicht der Schiebe-Schwenkmechanik aus Figur 1 mit daran befestigter Ablage mit aus der Führungsschiene herausgeschobener Laufschiene nach dem Wiederabsenken der Ablage,
- Figuren 5 und 6: entsprechende mit V und VI in Figur 4 bezeichneten Ausschnitte zur Darstellung der Position des Aktivators und des Mitnehmers der Dämpfungseinheit,
- Figur 7: eine Seitenansicht der Schiebe-Schwenkmechanik mit daran befestigter Ablage kurz vor Erreichen der Endposition im Korpus des Möbels oder Haushaltsgerätes beim Ankoppeln des Aktivators mit dem Mitnehmer der Dämpfungseinheit,
- Figur 8: eine Detaildarstellung des in Figur 7 mit VIII bezeichneten Ausschnitts,
- Figur 9: eine Seitenansicht der Schiebe-Schwenkmechanik mit daran befestigter Ablage in ihrer eingefahrenen Endposition im Korpus des Möbels oder Haushaltsgerätes,
- Figur 10: eine Detaildarstellung des in Figur 9 mit X bezeichneten Ausschnitts,
- Figur 11: eine Ansicht von vorn auf die Schiebe-Schwenkmechanik mit daran befestigter Ablage,
- Figur 12: eine perspektivische Ansicht einer an einer Auszugsführung fixierten Ablage des Haushaltsgerätes gemäß Anspruch 2,
- Figur 13: eine perspektivische Ansicht der Auszugsführung,
- Figuren 14 bis 16: Seitenansichten der Auszugsführung in unterschiedlichen Positionen und
- Figur 17: eine Ansicht von vorne auf die in Figur 13 gezeigte Auszugsführung.
In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Schiebe-Schwenkmechanik, Schwenkarme, Ablage, Dämpfungseinheit und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

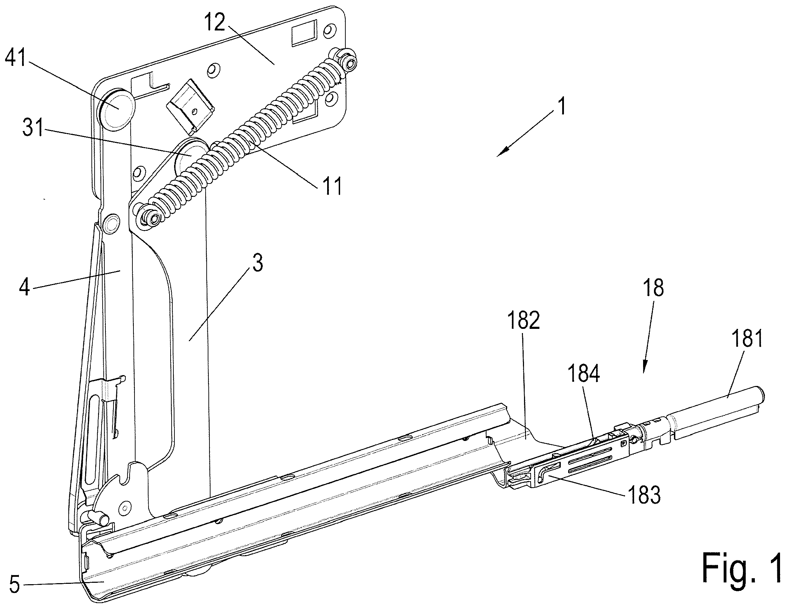

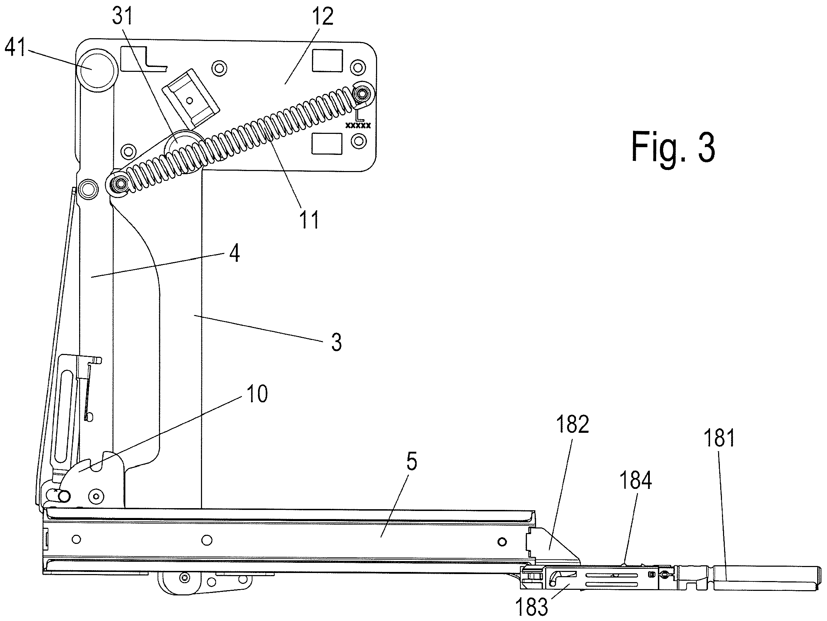

In den Figuren 1 bis 11 ist mit dem Bezugszeichen 1 insgesamt eine Ausführungsvariante einer Schiebe-Schwenkmechanik bezeichnet. Die Schiebe-Schwenkmechanik 1 weist dabei eine Seitenwandhalterung 12 zur Befestigung der Schiebe-Schwenkmechanik 1 an Innenseiten oder Seiteninnenwänden eines (nicht dargestellten) Möbels oder Haushaltsgerätes, insbesondere einer Spülmaschine oder eines Gargerätes auf, wobei die Seitenwandhalterung 12 im Falle eines Haushaltsgerätes an jeweiligen gegenüberliegenden Innenseiten eines Nutzraumes, insbesondere Spülraums oder Garraumes befestigt sind.
An dieser Seitenwandhalterung 12 sind Schwenkarme 3, 4 über jeweilige Drehgelenke 31, 41 schwenkbar festgelegt. Diese Schwenkarme 3, 4 sind dabei über weitere Drehgelenke schwenkbar an einer Führungsschiene 5 befestigt, so dass die Führungsschiene 5 bei einer Schwenkbewegung der Schwenkarme 3, 4 in der waagerechten Position verbleibend aus einer unteren Position innerhalb eines Korpus des Möbels oder Haushaltsgerätes in eine angehobene, obere Position zumindest teilweise außerhalb des Korpus verschwenkbar ist.

Die Synchronisierung zweier solcher Schiebe-Schwenkmechaniken 1 erfolgt dabei bevorzugt über ein Sychronisationselement, das in der vorne genannten WO 2014/033092 A1 näher beschrieben ist und deren Inhalt hiermit in diese Anmeldung aufgenommen wird.

Wie in den Figuren 1 bis 3 des Weiteren gezeigt ist, ist zur Unterstützung der Anhebe- und Absenkbewegung an der Seitenwandhalterung 12 eine bevorzugt als Zugfeder ausgebildete Anhebe- und/oder Absenkhilfe 11 zur Unterstützung der Schwenkbewegung der Schwenkarme 3, 4 vorgesehen, die einerseits Bolzen der Seitenwandhalterung 12 und andererseits am ersten Schwenkarm 3 befestigt ist.

Zur Verhinderung einer gleichzeitigen Schwenk- und Schiebbewegung der Ablage 15 und damit auch der Schiebe-Schwenkmechanik, weist die Schiebe-Schwenkmechanik 1 eine an der Führungsschiene 5 und einem der Schwenkarme 3, 4 angeordneten Arretiermechanismus auf, der durch einen an der Laufschiene 6 fixierte Aktivator-Baugruppe 7 betätigbar ist. Zur näheren Beschreibung des Arretiermechanismus wird ebenfalls auf die Beschreibung der WO 2014/033092 A1 verwiesen.

Zur Abdämpfung einer Einfahrbewegung der Ablage 15 in eine untere Endposition innerhalb des Korpus ist an der Schiebe-Schwenkmechanik 1, wie in den Figuren 1 bis 11 gezeigt ist, eine Dämpfungseinheit 18 angeordnet. Diese Dämpfungseinheit 18 weist dabei bevorzugt einen Dämpfer 181 und einen den Dämpfer 181 aktivierenden Aktivator 185 auf. Wie in den Figuren 1 bis 3 gezeigt, weist die Dämpfungseinheit 18 des Weiteren einen Mitnehmer 184, der in einem Mitnehmergehäuse 183 verfahrbar ist, wobei der Mitnehmer 184 vorzugsweise über eine in den Dämpfer 181 ein- und ausfahrbaren Koppelstange mit dem Dämpfer 181 verbunden ist und so eine Bewegung des Mitnehmers 184 und damit des mit diesem im Eingriff stehenden Aktivators 185 abdämpft.

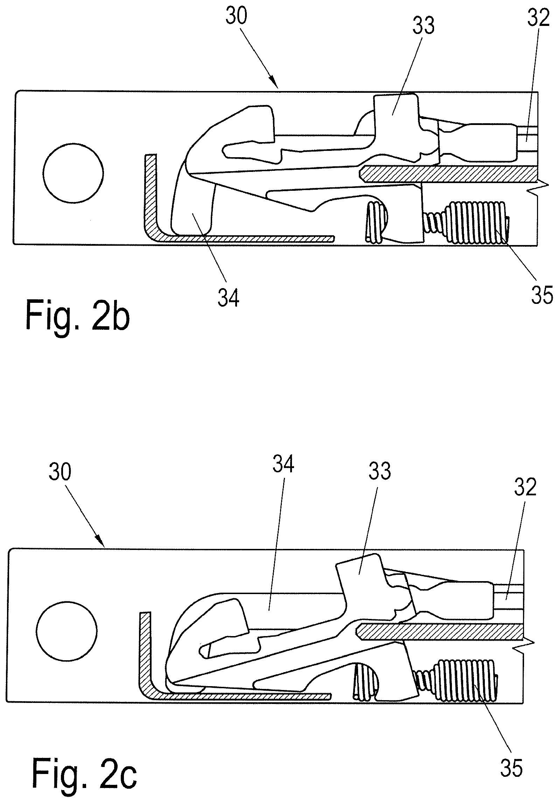

Zusätzlich zur Dämpfungseinheit 18 kann auch eine Einzugsvorrichtung 30 verwendet werden. Der Mitnehmer 33 ist gleichzeitig an einen Kraftspeicher 35 und an eine Koppelstange 32 für einen Dämpfer 181 gekoppelt. Ein Detail der Einzugsvorrichtung ist in den Figuren 2b und 2c einmal für den verriegelten Zustand und einmal für den entriegelten Zustand der Auszugsführung 2 gezeigt, bei der der Mitnehmer 33 in einem abgewinkelten Abschnitt der Führungsbahn 34 abgelegt und der Kraftspeicher 35 gespannt ist. Die Funktionsweise einer gedämpften Einzugsvorrichtung ist beispielsweise in der DE 102011053840 A1 beschrieben. Der Kraftspeicher 35 ist dabei vorzugsweise als Federelement ausgebildet.

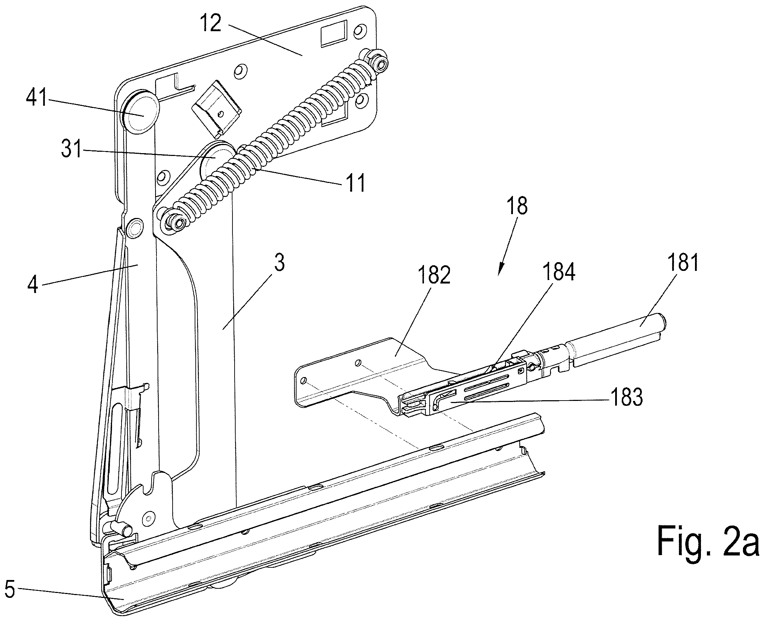

Das Mitnehmergehäuse 183 der Dämpfungseinheit 181 ist dabei, wie in Figur 2a gezeigt, fest mit einem Befestigungsstück 182 verbunden, welches seinerseits an der Führungsschiene 5 befestigt ist, beispielsweise mit Schrauben oder Bolzen oder auch verschweißt. Wie in Figur 2 des Weiteren zu erkennen ist, ist dieses Befestigungsstück 182 dabei bevorzugt als Blechstück ausgebildet, dass an die Geometrie der Führungsschiene 5 angepasst ist und diese in der hier gezeigten Ausführungsvariante von unten umgreift und auf ihrer der Seitenwand des Korpus zugewandten Seite an der Führungsschiene 5 fixiert ist.

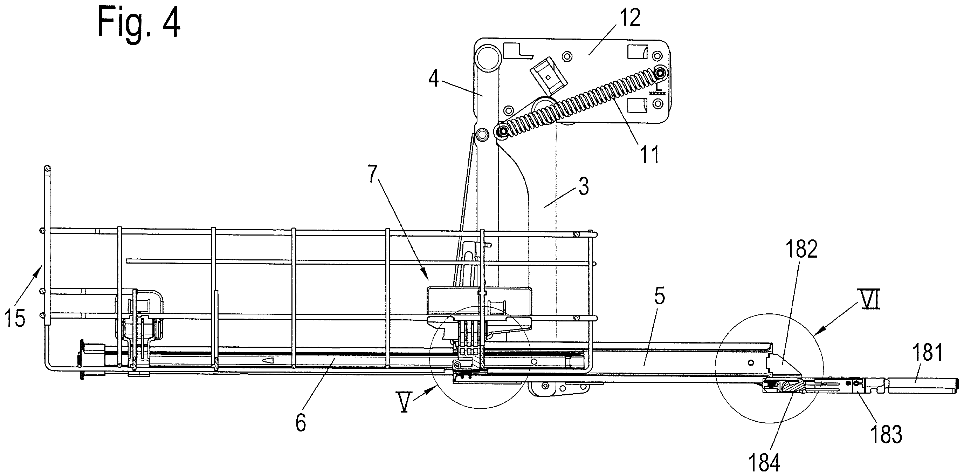

Wie in den Figuren 4 bis 10 gezeigt, ist der Aktivator 185 bevorzugt an der Aktivator-Baugruppe 7 befestigt oder einstückig mit der Aktivator-Baugruppe 7 ausgebildet. Die Aktivatorbaugruppe kann dabei auch gleichzeitig Befestigungselemente für die Befestigung der Ablage 15 an der Auszugsführung 2 aufweisen. Denkbar ist auch die Festlegung des Aktivators 185 an der Laufschiene 6 oder einem anderen mit der Laufschiene 6 bewegbaren Bauteil, beispielsweise der Ablage 15.

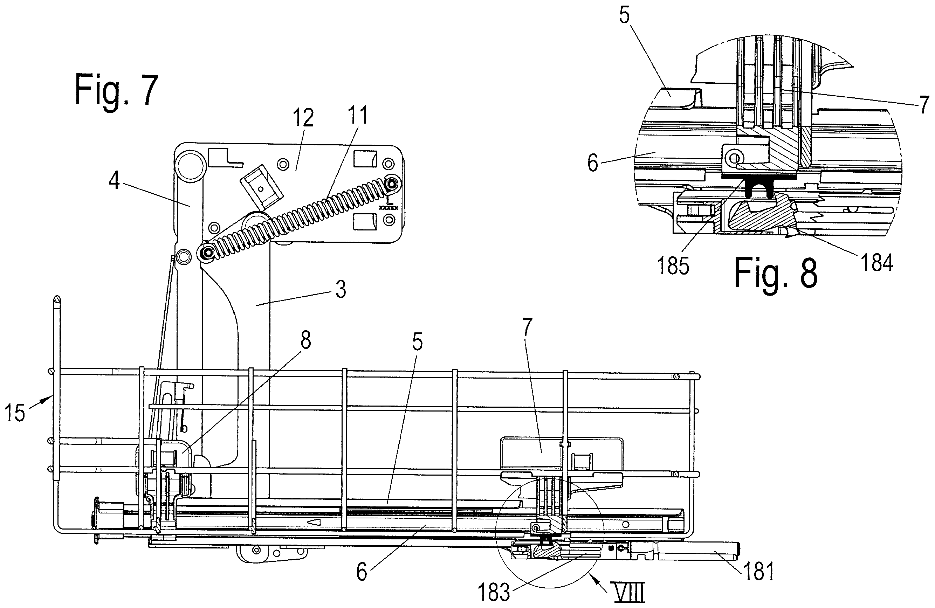

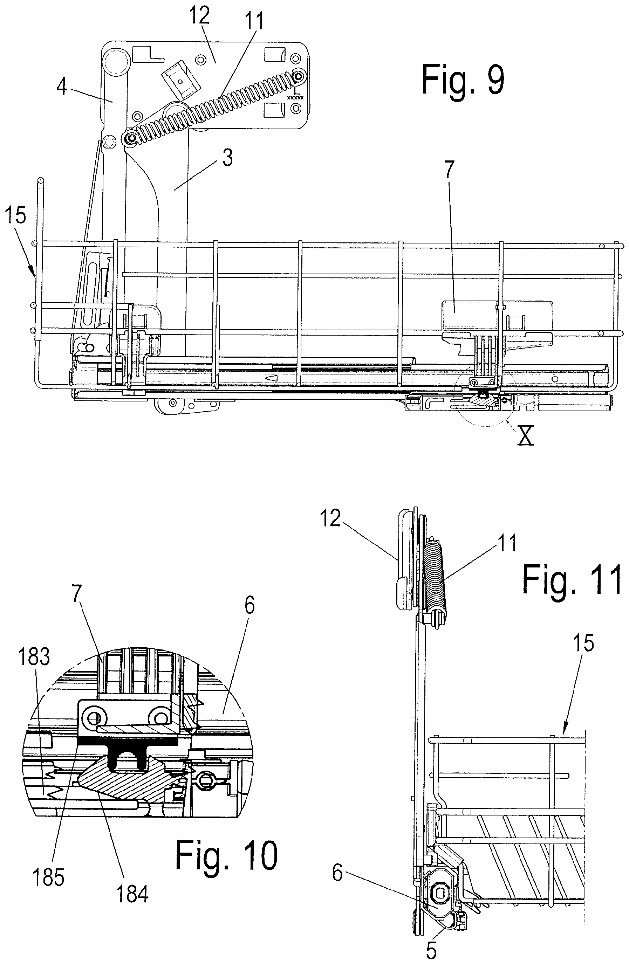

Der Aktivator 185 weist dabei in der hier gezeigten Ausführungsvariante 2 nach unten in Richtung des Mitnehmers 184 hervorstehende Stege auf, die im in den Figuren 9 und 10 gezeigten mit dem Mitnehmer 184 gekoppelten Zustand in eine den Aktivator 185 zugewandte Ausnehmung des Mitnehmers 184 eingreifen. Der Mitnehmer 184 ist in einer Führungsbahn in dem Mitnehmergehäuse 183 geführt, die an einem Ende ein Abkippen des Mitnehmers 184 erlaubt, in der der Aktivator 185 aus dem Eingriff mit dem Mitnehmer 184, wie in den Figuren 7 und 8 gezeigt freigebbar bzw. aufnehmbar ist.

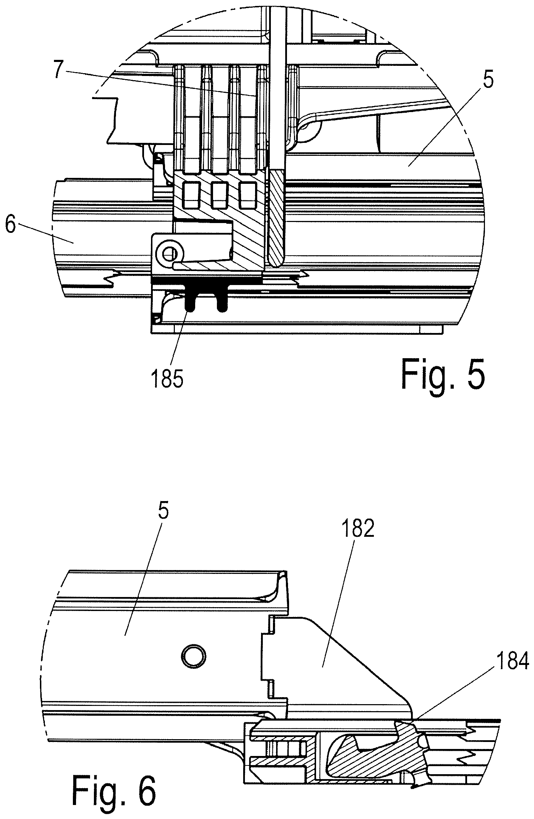

Die Figuren 4 bis 6 zeigen dabei die Auszugsstellung der Ablage 15, bei der der Aktivator 185 von dem Mitnehmer 184 getrennt ist und der Mitnehmer 184, wie in der Detailansicht in Figur 6 gezeigt, in der abgekippten Stellung verbleibt, bis die Ablage 15 und damit die Laufschiene 6 sowie die Aktivator-Baugruppe 7 wieder in den Bereich des Mitnehmers 184 eingeschoben wird, gezeigt in den Figuren 7 und 8, in der der Aktivator 185 wieder in die Ausnehmung des Mitnehmers 184 einläuft und zusammen mit dem Mitnehmer 184 in der Führungsbahn 183 in die Endposition innerhalb des Korpus des Möbels oder Haushaltsgeräts verfahren wird (gezeigt in den Figuren 9 und 10) und dabei durch die Ankopplung des Mitnehmers 184 mit dem Dämpfer 181 die Einfahrbewegung gedämpft ausgeführt wird. Falls eine Einzugsvorrichtung 30 mit Dämpfungseinheit 18 gemäß den Figuren 2b und 2c verwendet wird, wird die Einfahrbewegung noch zusätzlich unterstützt.

Figur 11 zeigt die Schiebeschwenkmechanik 1 mit daran befestigter Ablage 15 von vorne.

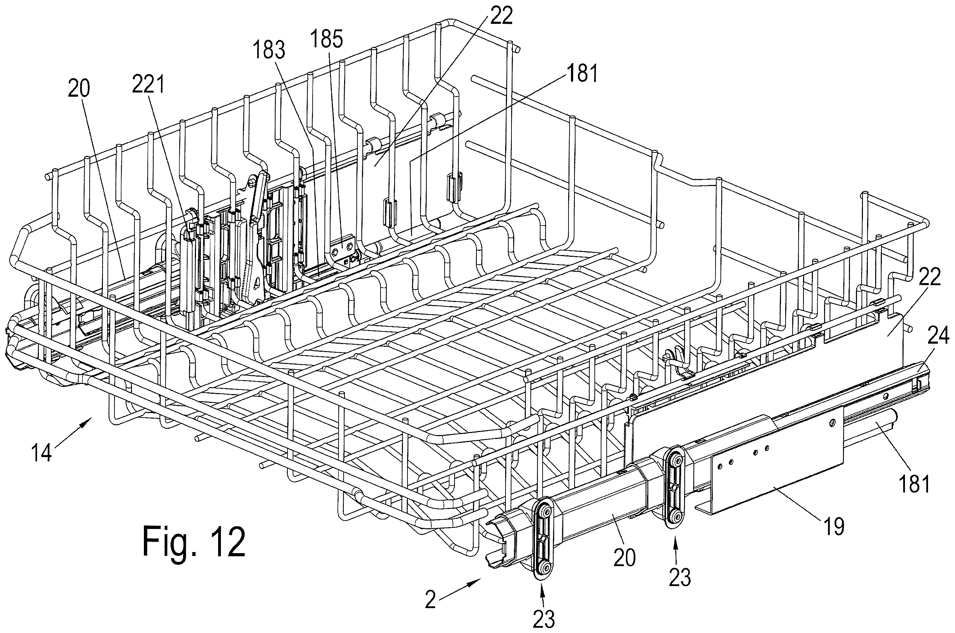

Eine Ausführungsvariante des Haushaltsgerätes gemäß Anspruch 2 wird im Folgenden anhand der Figuren 12 bis 17 beschrieben.

In Figur 12 ist mit dem Bezugszeichen 2 eine Auszugsführung bezeichnet. Jeweils eine solche Auszugsführung 2 ist dabei an jeweiligen Innenseiten eines Nutzraumes, insbesondere Spülraumes oder Garraumes eines Haushaltsgerätes befestigt. An den Auszugsführungen 2 ist eine Ablage 14 fixiert, wobei die Ablage 14 mithilfe der beidseits angeordneten Auszugsführungen 2 aus dem Nutzraum ausziehbar bzw. in diesen einschiebbar ist.

Die Auszugsführung 2 weist dabei eine an der Innenseite des Nutzraumes befestigte Führungsschiene 20 und eine in der Führungsschiene 20 verfahrbare und an der Ablage 14 fixierte Laufschiene 21 auf, wobei an der Laufschiene 21 mindestens eine Halterung 22 zur Fixierung der Ablage 14 angeordnet ist. Bei der in den Figuren 12 bis 17 gezeigten Ausführungsvariante ist die Dämpfungseinheit 18 an der Führungsschiene 20 über ein bevorzugt L-förmiges Befestigungselement 19 befestigbar. Des Weiteren sind Befestigungselemente 23 an der Führungsschiene 20 festgelegt, die die Führungsschiene 20 teilweise umgreifen und an den Innenseiten des Nutzraumes des Haushaltsgerätes festlegbar, insbesondere verschraubbar, sind.

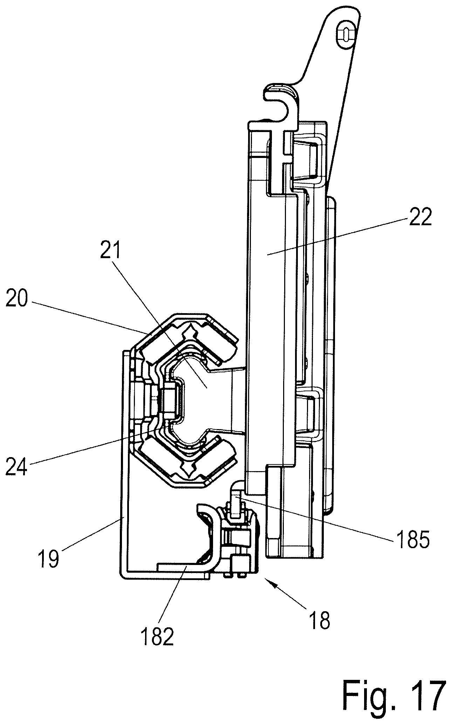

Die Auszugsführung 2 weist in der hier gezeigten Ausführungsvariante des Weiteren, wie beispielsweise in Figur 17 gezeigt, eine in der Führungsschiene 20 verfahrbare Mittelschiene 24 auf, die die Laufschiene 21 verfahrbar aufnimmt. Die Laufschiene 21 ist dabei vorzugsweise einstückig mit der Halterung 22 ausgebildet, wobei die Halterung 22 der Fixierung der Ablage 14 dient. Dazu sind an der Halterung 22 mehrere Klemm- oder Rastelemente 221, 223, 222 vorgesehen, die der Fixierung von Stabelementen der hier als Drahtkorb ausgebildeten Ablage 14 dienen. Zusätzlich kann die Halterung 22 so ausgebildet sein, dass die Ablage 14 in der Höhe verstellbar ist.

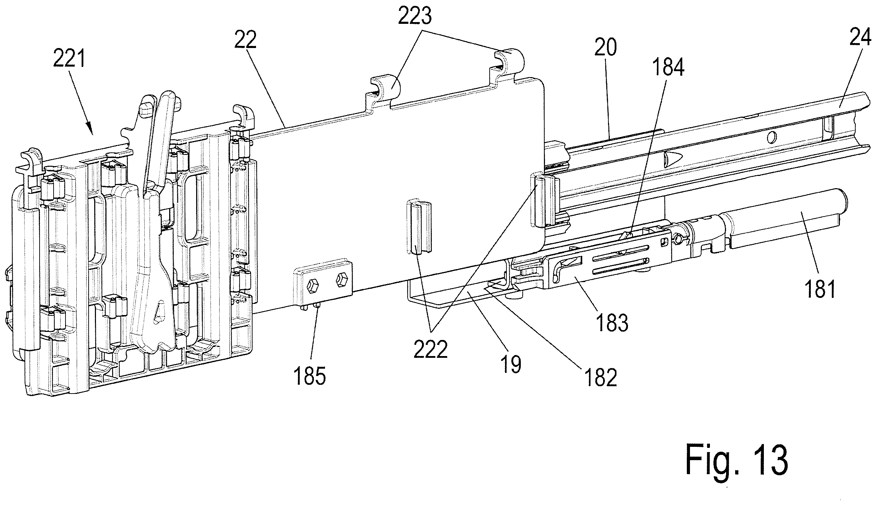

Wie insbesondere in den Figuren 13 bis 17 zu erkennen ist, ist an den Befestigungselementen 19 ein Dämpfer 181 mit daran befestigtem Mitnehmergehäuse 183 über ein Verbindungsstück 182 festgelegt. Ein Aktivator 185 ist dabei an der Halterung 22 angeordnet. Die Anordnung des Aktivators 185 an der Halterung 22 erfolgt dabei vorzugsweise durch Festlegen, insbesondere Verklemmen eines als separates Bauteil ausgebildeten Aktivators 185 in einer dafür vorgesehenen Ausnehmung in der Halterung 22. Denkbar ist aber auch, den Aktivator 185 einstückig mit der Halterung 22 auszubilden. Die derart an der Auszugsführung 2 angeordnete Dämpfungseinheit 18 entspricht dabei vorzugsweise der weiter oben beschriebenen Dämpfungseinheit 18 der Schiebe-Schwenkmechanik. Die Dämpfungseinheit 18 dient auch hier der abgedämpften Einfahrbewegung der Ablage 14 in ihre Endposition innerhalb des Nutzraums des Haushaltsgerätes.

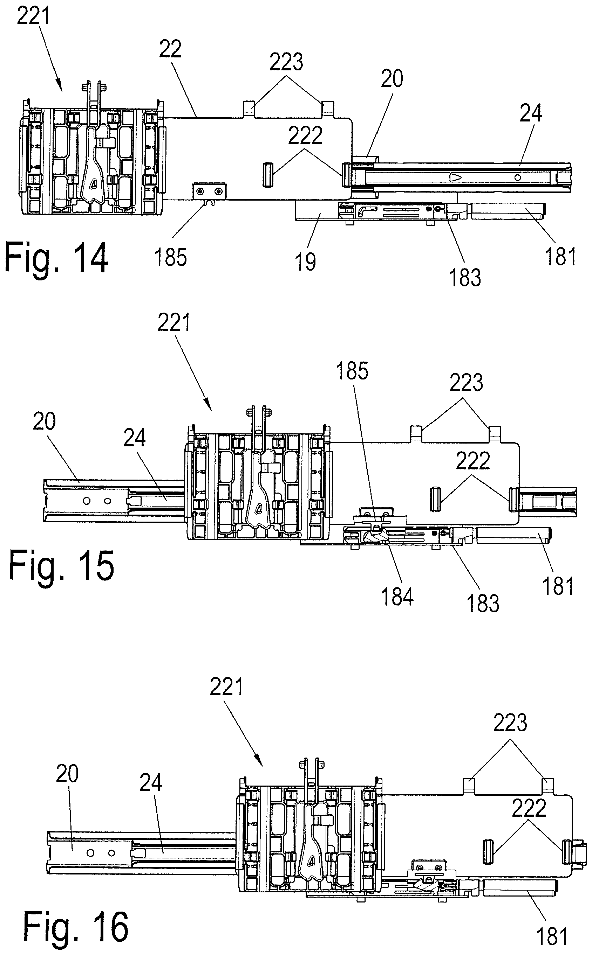

Die Figuren 14 bis 16 zeigen dabei den Ablauf einer Einfahrbewegung der Ablage 14 bzw. der sich mit der Halterung 22 bewegenden Ablage 14 in ihre Endposition.

Figur 14 zeigt dabei den ausgezogenen Zustand, bei dem der Aktivator 185 von dem Mitnehmer 184 der Dämpfungseinheit 18 entkoppelt ist.

Figur 15 zeigt die Position der Halterung 22 und damit der Ablage 14, bei der der Aktivator 185 mit dem Mitnehmer 184 der Dämpfungseinheit 18 einkoppelt.

Bei der anschließenden Weiterbewegung der Ablage 14 in ihre Endposition wird der Mitnehmer 184 im Mitnehmergehäuse 183 aus der abgekippten Position in die den Aktivator 185 umgreifende Stellung gekippt und in die Endlage bewegt, wie sie in Figur 16 zeigt ist, gedämpft durch den Dämpfer 181.
Figur 17 zeigt die Auszugsführung 2 oder daran befestigte Ablage 14 in einer Ansicht von vorne, vor der Kopplung des Aktivators 185 mit dem Mitnehmer 184 der Dämpfungseinheit 18.
Zusätzlich zur Dämpfungseinheit 18 kann auch eine Einzugsvorrichtung 30 verwendet werden. Der Mitnehmer 33 ist gleichzeitig an einen Kraftspeicher 35 und an eine Koppelstange 32 für einen Dämpfer 181 gekoppelt. Ein Detail der Einzugsvorrichtung ist in den Figuren 2b und 2c einmal für den verriegelten Zustand und einmal für den entriegelten Zustand der Auszugsführung 2 gezeigt, bei der der Mitnehmer 33 in einem abgewinkelten Abschnitt der Führungsbahn 34 abgelegt und der Kraftspeicher 35 gespannt ist. Die Funktionsweise einer gedämpften Einzugsvorrichtung ist beispielsweise in der DE 102011053840 A1 beschrieben. Falls eine Einzugsvorrichtung 30 mit Dämpfungseinheit 18 gemäß den Figuren 2b und 2c verwendet wird, wird die Einfahrbewegung noch zusätzlich unterstützt. Der Kraftspeicher 35 ist dabei vorzugsweise als Federelement ausgebildet.

Die Auszugsführung 2 kann dabei auch gemäß einer Ausführungsvariante als Teil einer Ausstoßvorrichtung ausgebildet sein, woraus sich die in der Beschreibungseinleitung genannten Vorteile ergeben.
Zumindest ein Teil der Auszugsführung als auch die Dämpfungseinheit 18 bestehen dabei vorzugsweise aus einem nicht rostenden Stahl, um den in einem Haushaltsgerät wie einem Geschirrspüler oder einem Gargerät auftretenden Gegebenheiten, wie große Hitze, Feuchtigkeit, Salz, Spülmittel, Fett stand zu halten.

### Bezugszeichenliste

- 1: Schiebe-Schwenkmechanik
- 2: Auszugsführung

- 3: Schwenkarm
- 31: Drehgelenk

- 4: Schwenkarm
- 41: Drehgelenk

- 5: Führungsschiene
- 6: Laufschiene
- 7: Aktivator-Baugruppe
- 11: Absenkhilfe
- 12: Seitenwandhalterung
- 14: Ablage
- 15: Ablage

- 18: Dämpfungseinheit
- 181: Dämpfer
- 182: Festlegungselement
- 183: Mitnehmergehäuse
- 184: Mitnehmer
- 185: Aktivator

- 19: Befestigungselement
- 20: Führungsschiene
- 21: Laufschiene

- 22: Halterung
- 221: Klemm- oder Rastelement
- 222: Klemm- oder Rastelement
- 223: Klemm- oder Rastelement
- 23: Befestigungselement
- 24: Mittelschiene

- 30: Einzugsvorrichtung
- 32: Koppelstange
- 33: Mitnehmer
- 34: Führungsbahn
- 35: Kraftspeicher

## Patentansprüche

1. Möbel oder Haushaltsgerät mit einer Schiebe-Schwenkmechanik (1) einer Ablage (15) zum Ausziehen und Anheben der Ablage (15) aus einem Korpus des Möbels oder Haushaltsgerätes, aufweisend
- wenigstens zwei an mindestens einer der Seitenwände des Korpus mit einem ersten Ende parallel zur Ebene der Seitenwände drehbar festgelegte und parallel zueinander beabstandet angeordnete Schwenkarme (3, 4),
- wobei an jeweiligen zweiten Enden der Schwenkarme (3, 4) eine Führungsschiene (5) derart parallel zur Ebene der Seitenwände schwenkbar festgelegt sind, dass die Führungsschiene (5) aus einer unteren Position innerhalb des Korpus in eine angehobene, obere Position zumindest teilweise außerhalb des Korpus verschwenkbar ist,
- zumindest eine in der Führungsschiene (5) linear verschiebbare Laufschiene (6), an der die Ablage (15) befestigt ist,
- wobei an der Schiebe-Schwenkmechanik (1) eine die Fahrbewegung der Ablage (15) in eine Endposition abdämpfende Dämpfungseinheit (18) angeordnet ist
**dadurch gekennzeichnet, dass**
- die Dämpfungseinheit (18) als Teil einer Einzugsvorrichtung oder Ausstoßvorrichtung ausgebildet ist.

2. Möbel oder Haushaltsgerät nach Anspruch 1, **dadurch gekennzeichnet, dass** die Dämpfungseinheit (18) einen Dämpfer (181) und einen den Dämpfer (181) aktivierenden Aktivator (185) aufweist.

3. Möbel oder Haushaltsgerät nach Anspruch 2, **dadurch gekennzeichnet, dass** der Aktivator (185) an der Laufschiene (6, 21) oder einem mit der Laufschiene (6, 21) bewegbaren Bauteil und der Dämpfer (181) an der Führungsschiene (5, 20) oder einem mit der Führungsschiene (5, 20) verbundenen Bauteil angeordnet ist.

4. Möbel oder Haushaltsgerät nach Anspruch 3, **dadurch gekennzeichnet, dass** die Schiebe-Schwenkmechanik eine an der Laufschiene (6) fixierte Aktivatorbaugruppe (7) aufweist und der Aktivator (185) an der Aktivatorbaugruppe (7) und der Dämpfer (181) an der Führungsschiene (5) angeordnet ist.

5. Möbel oder Haushaltsgerät nach Anspruch 4, **dadurch gekennzeichnet, dass** der Aktivator (185) einstückig mit der Aktivatorbaugruppe (7) ausgebildet ist.

6. Haushaltsgerät nach einem der vorstehenden Ansprüche, , **dadurch gekennzeichnet, dass** das Haushaltsgerät als Spülmaschine oder Gargerät ausgebildet ist, wobei die mindestens eine Schiebe-Schwenkmechanik an Innenseiten eines Spülraumes oder Garraums fixiert ist.

## Claims

1. A piece of furniture or a domestic appliance comprising a sliding/pivoting mechanism (1) of a shelf (15) for pulling out and raising the shelf (15) from a body of the piece of furniture or of the domestic appliance, having
- at least two swivelling arms (3, 4) which are fastened by means of a first end to at least one side of the walls of the body in such a way that the swivelling arms can be rotated parallel to the plane of the side walls and which are arranged parallel to each other at a distance from each other,
- wherein at respective second ends of the swivelling arms (3, 4), a guide rail (5) is fastened in such a way that the guide rail (5) can be pivoted parallel to the plane of the side walls and in such a way that the guide rail (5) can be pivoted from a lower position inside the body to a raised upper position at least partially outside the body,
- at least one running rail (6), which is linearly displaceable in the guide rail (5) and to which the shelf (15) is fastened
- whereby a damping unit (18) which damps the travelling motion of the shelf (15) in an end position is arranged on the sliding/pivoting mechanism (1)
**characterized in that**
- the damping unit (18) is designed as part of a retraction system or an ejection system.

2. The piece of furniture or the domestic appliance according to claim 1, **characterised in that** the damping unit (18) has a damper (181) and an activator (185) which activates the damper (181).

3. The piece of furniture or the domestic appliance according to claim 1, **characterised in that** the activator (185) is arranged on the running rail (6, 21) or on a component which can be moved with the running rail (6, 21) and the damper (181) is arranged on the guide rail (5, 20) or on a component which is connected to the guide rail (5, 20).

4. The piece of furniture or the domestic appliance according to claim 3, **characterised in that** the sliding/pivoting mechanism has an activator assembly (7) attached to the running rail (6) and the activator (185) is arranged on the activator assembly (7) and the damper (181) is arranged on the guide rail (5).

5. The piece of furniture or the domestic appliance according to claim 4, **characterised in that** the activator (185) is designed in one piece with the activator assembly (7).

6. A domestic appliance according to one of the preceding claims, **characterized in that** the domestic appliance is designed as a dishwasher or a cooking appliance, whereby the at least one sliding/pivoting mechanism is arranged on the inner sides of a washing compartment or cooking space.

## Revendications

1. Meuble ou appareil ménager avec un mécanisme coulissant et pivotant (1) pour un plateau (15) permettant d'extraire et de soulever le plateau (15) hors d'un corps du meuble ou de l'appareil ménager, présentant
- au moins deux bras pivotants (3, 4) fixés avec possibilité de rotation sur au moins une des parois latérales du corps avec une première extrémité parallèle au plan des parois latérales et disposés à distance et parallèlement l'un à l'autre,
- un rail de guidage (5) étant fixé de façon pivotante à la deuxième extrémité des bras pivotants (3, 4) parallèlement au plan des parois latérales, de telle manière que le rail de guidage (5) puisse pivoter d'une position basse à l'intérieur du corps à une position haute soulevée au moins partiellement à l'extérieur du corps,
- au moins un rail de glissement (6) capable de déplacement linéaire dans le rail de guidage (5), sur lequel le plateau (15) est fixé,
- une unité d'amortissement (18) qui amortit le déplacement du plateau (15) dans une position de fin de course étant disposée sur le mécanisme coulissant et pivotant (1),
**caractérisé en ce que**
- l'unité d'amortissement (18) est conçue comme une partie d'un dispositif de rétraction ou d'un dispositif d'éjection.

2. Meuble ou appareil ménager selon la revendication 1, **caractérisé en ce que** l'unité d'amortissement (18) présente un amortisseur (181) et un activateur (185) qui active l'amortisseur (181).

3. Meuble ou appareil ménager selon la revendication 2, **caractérisé en ce que** l'activateur (185) est disposé sur le rail de glissement (6, 21) ou sur une pièce capable de se déplacer avec le rail de glissement (6, 21) et l'amortisseur (181) est disposé sur le rail de guidage (5, 20) ou sur une pièce assemblée avec le rail de guidage (5, 20).

4. Meuble ou appareil ménager selon la revendication 3, **caractérisé en ce que** le mécanisme coulissant et pivotant présente un module d'activateur (7) fixé au rail de glissement (6) et l'activateur (185) est disposé sur le module d'activateur (7) et l'amortisseur (181) sur le rail de guidage (5).

5. Meuble ou appareil ménager selon la revendication 4, **caractérisé en ce que** l'activateur (185) est formé d'un seul tenant avec le module d'activateur (7).

6. Appareil ménager selon l'une des revendications précédentes, **caractérisé en ce que** l'appareil ménager est conformé comme une machine à laver la vaisselle ou un appareil de cuisson, l'au moins un mécanisme coulissant et pivotant étant fixé à l'intérieur d'un espace de lavage ou d'un espace de cuisson.
